# EUROPEAN PATENT APPLICATION

(11) **EP 3 685 794 A1**
(43) Date of publication of application: **29.07.2020**
(21) Application number: 18856003.1
(22) Date of filing: 25.04.2018
(51) Int. Cl.: A61C 8/00, A61C 13/00

(54) **METHOD FOR PRODUCING A DENTAL MODEL AND DENTAL MODEL OBTAINED**

(30) Priority: 18.09.2017 ES 201731125
(71) Applicant: Padrós Roldán, Roberto, 08034 Barcelona (ES); Vogul, S.L.U., Andorra La Vella AD500 (AD)
(72) Inventor: PADRÓS ROLDÁN, Roberto, ANDORRA LA VELLA AD500 (ES); MARTINEZ LOPEZ, Jordi, ANDORRA LA VELLA AD500 (AD); TENA CORTS, Guillem, ANDORRA LA VELLA AD500 (AD); PERELLO FORT, Ruben, ANDORRA LA VELLA AD500 (AD)
(74) Representative: Diaz Nunez, Joaquin
(86) International application number: PCT/ES2018/070327
(87) International publication number: WO 2019/053306

(57) **Abstract**

A method for the manufacture of a dental model; including: (a) the generation in a digital file of a virtual model of a patient's anatomy and the incorporation into that virtual model, in a predetermined position, of the digitized form of at least a portion of an implant, or a replica of an implant, or an intermediate attachment suitable for the assembling of a dental prosthesis and, (b) the production from said digital file, by means of 3D printing or machining techniques, of a physical dental model incorporating the same body: a model with the patient's anatomy and with the shapes of at least an implant portion, or an implant replica, or an intermediate attachment, incorporated in that model.

The invention also includes the dental model obtained

## Description

### Object of the invention

The object of the present invention is a method for the manufacture of a dental model and the dental model obtained; said dental model having characteristics aimed at notably simplifying the rehabilitation of a dental prosthesis which reproduces the anatomy of the patient by means of the corresponding fixing screw and substantially increasing the precision in said rehabilitation; also including the invention of a method for the manufacture of said dental model.

### Field of application of the invention

This invention is applicable in the field of dental implantology and construction of dental prosthesis.

### State of the art

For years there have been different solutions when it comes to replicating a patient's dental structure in order to rehabilitate lost or damaged dental units.

One widely used solution consists in taking a physical impression of the patient's mouth to have a negative that is filled with a hardening material to obtain a physical model that represents the patient's oral structure.

In this plaster model, replicas of the implants are inserted, representing the model and position of the implant in the mouth and facilitating the correct rehabilitation.

A dental implant replica for a physical dental model is described for example in application WO/2015/055541 A1.

A digitizable dental implant replica for dental implantology is also described in the utility model ES 1 179 484 U. It allows digital recording of the implant position extraorally after positioning the replica on an impression post in a patient's dental impression tray and without making the physical dental model.

It should be noted that the position of these replicas on the model is crucial for a good design of the subsequent prosthetic structure. So far, a good position has been achieved from transfers or impression posts that maintain the position of the implant in the negative mould and transfer it to the plaster mould.

With the implementation of the intraoral scan, the intermediate step of obtaining a negative mould is eliminated and the model is manufactured digitally directly. With this advance, the problem of positioning the replicas of the implants on the generated model arises, as no guidance is provided by the transfers or impression posts.

Thus, with the technological advance provided by the intraoral scan, the problem of positioning the replicas appears, which was previously resolved by maintaining the relative position between implants, transfers or impression posts and implant replicas. At present, a compatible system must be found that guarantees the minimum loss of precision.

The main problems of current technology lie in the inherent accumulation of positioning errors in the manufacturing chain and use of a dental model and prosthesis.

To the current problem of reliably positioning an implant replica on a model generated by the impression in the mouth of the patient's dental structure, we must add the growing tendency not to generate these impressions with silicones or alginates and to carry out the scanning directly in the patient's mouth, resulting in the absence of the model and physical positions of the implants, which leads to a digital workflow.

This digital workflow is what makes one question the efficiency of the positioning of current technology, since it is based on geometries that are not available because they have been printed from the patient's mouth, using other generation systems, such as a digital scanner or 3d impression.

### Description of the invention

The present invention shows a series of improvements aimed at satisfactorily solving the above-mentioned problems and at significantly improving the precision and accuracy of a model that reproduces the location of dental implants in the patient's oral cavity.

The method for the manufacture of a dental model, in accordance with the invention, comprises
(a) the generation in a digital file of a virtual model of the patient's anatomy and the incorporation into that virtual model, in a predetermined position, of digitized shapes of at least a portion of the implant, or of an implant replica, or of an intermediate attachment, suitable for the assembly of a dental prosthesis; and
(b) obtaining from the above-mentioned digital file, by means of 3D printing or machining techniques, a physical dental model incorporating in one body: a model with the patient's anatomy and at least one portion of the implant, or an implant replica, or an intermediate attachment incorporated in the virtual model.

The method described has a series of advantages over conventional techniques:
- it allows one to obtain in the same body a model with the patient's anatomy and the shapes and positions of the implants corresponding to the parts to be rehabilitated; making it unnecessary to manufacture on the one hand a physical replica of the implants and on the other hand a model with the patient's anatomy with adequate cavities for the insertion of the physical replica of the implants,
- avoids positioning errors of physical replicas in the physical model, since such physical replicas are not made;
- it allows the digital archive of the model with the shapes of the implants incorporated in it to be stored; it optimizes the management of the clinical histories of the patients in the clinic and in the laboratory, and makes other operations linked to current techniques unnecessary, such as the storage of the physical models for the time foreseen by law, the retrieval of the physical replicas used in the model and their storage for later use and,
- significantly reduces the manufacturing costs, since the construction of the model with at least an implant portion, or an implant replica, or an intermediate attachment incorporated in it is practically the same as the construction of the model with the necessary holes for the placement of the implant replicas; and the construction of the replicas is not necessary.

The digital file with the model of the patient's anatomy, and with the incorporated shape of at least one portion of the implant, or of an implant replica, or of an intermediate attachment for the prosthetic pieces to be rehabilitated, is made from digital files obtained by scanning techniques of the patient's anatomy and by digitizing the implants or intermediate attachments to be used.

In accordance with the invention, by means of digital treatment of the file, the definition in the virtual model has been foreseen, which includes the form of at least a portion of the implant, or of an implant replica, or of an intermediate attachment, of some means of fixation, or of some cavities for the accommodation of some means of connection for the fixation screws of the dental prosthesis.

The dental model obtained with the described method, includes in the same body
- a physical model of the patient's anatomy; and shapes of at least an implant portion, or an implant replica, or an intermediate attachment, in a predetermined position, suitable for attaching a dental prosthesis

This model includes a means of connection, or at least a housing for a means of connection, for the fixation screws of the dental prosthesis.

In a preferential embodiment of the invention such means of connection of the denture fixation screw to the model comprise a defined threaded hole in the body of the model itself, or in an insert provided with the thread of the screw housed in a cavity defined for that purpose in the dental model and provided with the means for securing the screw.

However, it is not ruled out that the means of connecting the fixation screw of the dental prosthesis to the model may be of any other type, for example, by clip connection, or bayonet type connection, as this does not alter the essential features of the invention.

### Description of the drawings

To complement the description being made and in order to facilitate the understanding of the characteristics of the invention, a set of drawings is attached to the present descriptive report, in which the following has been represented, for illustrative and non-limitative purposes
- Figure 1 shows a perspective partially sectioned view of an example of the manufacture of a dental model obtained in accordance with the present invention; of a dental prosthesis and of the elements for fixing the prosthesis to the model.

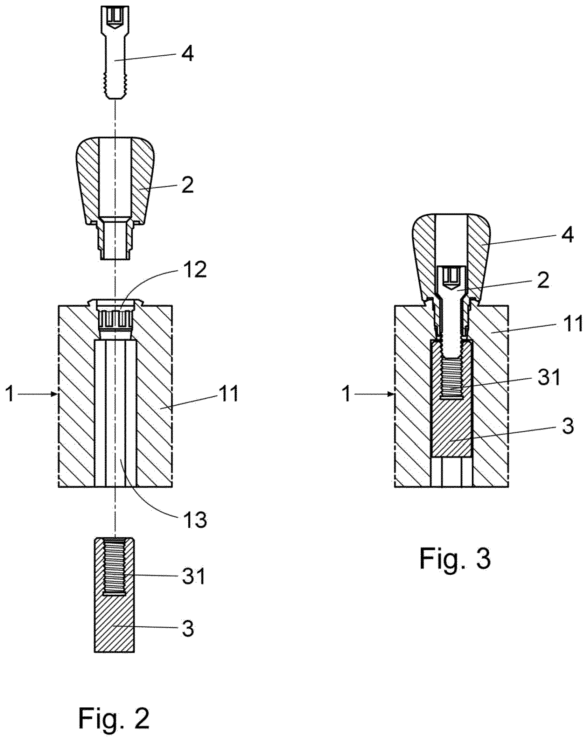

- Figure 2 shows an exploded detail in elevation of the elements of figure 1, sectioned by a vertical plane and in which the model has been partially represented.
- Figure 3 shows a view analogous to figure 2 with the denture mounted on the model.

Preferred embodiment of the invention.

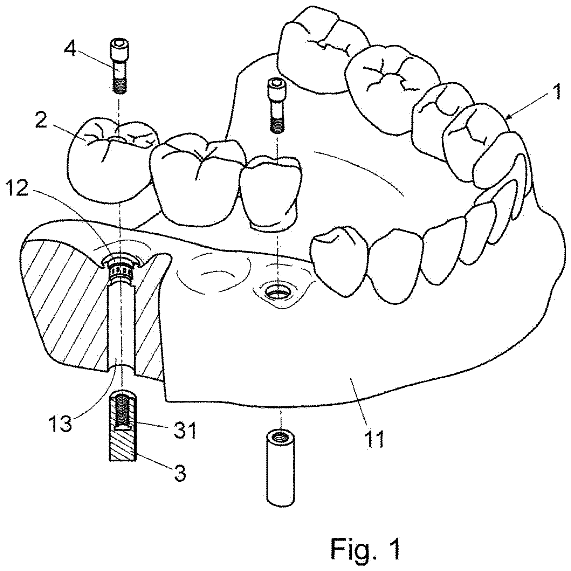

In the embodiment example shown in the attached figures, the dental model of Fig. 1 has in the same body: a physical model (11) of the patient's anatomy and the shapes of some implants (12) in some predetermined and suitable positions for the coupling of a dental prosthesis (2) with the dental pieces to be rehabilitated.

In this case the dental model of Fig. 1, obtained by means of a 3d impression, has posterior cavities (13) aligned with the shapes of the implants (12) defined in the dental model; these posterior cavities (13) are suitable for housing, without the possibility of rotation, inserts (3) with a threaded hole (31) for coupling the corresponding connection screws (4) of the dental prosthesis (2).

Having sufficiently described the nature of the invention, as well as an example of the preferred embodiment, it is stated to the appropriate effects that the materials, shape, size and arrangement of the elements described may be modified, provided that this does not imply an alteration of the essential characteristics of the invention which are claimed below.

## Claims

1. Method for the manufacture of a dental model; comprising
(a) the generation in a digital file of a virtual model of a patient's anatomy and the incorporation into that virtual model, in a predetermined position, of the digitized form of at least a portion of an implant, or of an implant replica, or of an intermediate attachment suitable for mounting a dental prosthesis; and
(b) obtaining from the above-mentioned digital file, by means of 3D printing or machining techniques, a physical dental model incorporating in the same body: a model of the patient's anatomy and the shapes of at least part of the implant, a replica of the implant, or an intermediate attachment incorporated in the model.

2. Dental model, **characterized in that** it includes in one body a physical model of the patient's anatomy; and shapes of at least a portion of the implant, or of an implant replica, or of an intermediate attachment, in a predetermined position, suitable for the attachment of a dental prosthesis.

3. Dental model, according to claim 2, **characterized in that** that the shapes of at least a portion of the implant, or of an implant replica, or of an intermediate attachment defined in the model body itself correspond to at least a portion of the implant, or of an implant replica, or of an intermediate attachment to which the dental prosthesis is attached.

4. Dental model, according to any of the claims 2 and 3; **characterized in that** it includes a means of connection of a dental prosthesis fixation screw, defined in the body of the model itself.

5. Dental model, according to any of the claims 2 and 3; **characterized in that** it includes at least one housing cavity, without the possibility of rotation, of an insert provided with a means of connection of a screw to secure the dental prosthesis.

6. Dental model, according to claim 5; **characterized in that** the means of connection for the fixation screw of the dental prosthesis comprise a threaded hole or any other retention system of the prosthesis.
